# EUROPEAN PATENT SPECIFICATION

(11) **EP 1 211 589 B1**
(45) Date of publication and mention of the grant of the patent: **11.04.2007**
(21) Application number: 01127123.6
(22) Date of filing: 15.11.2001
(51) Int. Cl.: G06F 21/00

(54) **A method and system for preventing impersonation of a database user**
Verfahren und System zum Verhindern von Imitation eines Datenbankbenutzers
Procédé et système pour empêcher l'imitation d'un utilisateur de base de données

(30) Priority: 29.11.2000 SE 0004375
(43) Date of publication of application: 05.06.2002
(73) Proprietor: Protegrity Research & Development, 931 78 Skelleftea (SE)
(72) Inventor: Mattsson, Ulf, Stamford, CT 06905 (US); Das, Tamojit, Stamford, CT 06905 (US)
(74) Representative: Lindberg, Klas Valter Bo

(56) References cited:
- JOBUSCH D L ET AL: "A SURVEY OF PASSWORD MECHANISMS: WEAKNESSES AND POTENTIAL IMPROVEMENTS. PART 1" COMPUTERS & SECURITY. INTERNATIONAL JOURNAL DEVOTED TO THE STUDY OF TECHNICAL AND FINANCIAL ASPECTS OF COMPUTER SECURITY, ELSEVIER SCIENCE PUBLISHERS. AMSTERDAM, NL, vol. 8, no. 7, 1 November 1989 (1989-11-01), pages 587-603, XP000072272 ISSN: 0167-4048
- ORACLE: "Database Security in Oracle8i - An Oracle Technical White Paper - November 1999" INTERNET ARTICLE, [Online] 30 November 1999 (1999-11-30), XP002237310 Retrieved from the Internet: <URL:http://technet.oracle.com/deploy/secu rity/pdf/oow99/dbswp86.pdf> [retrieved on 2003-03-27]
- BONTCHEV V: "POSSIBLE VIRUS ATTACKS AGAINST INTEGRITY PROGRAMS AND HOW TO PREVENT THEM" VIRUS BULLETIN CONFERENCE, VIRUS BULLETIN LTD., ABINGTON, GB, 2 September 1992 (1992-09-02), pages 131-142, XP000613974

## Description

### Field of invention

The present invention relates to a method and a system for preventing an administrator of a relational database impersonating a user.

### Background of the invention

In order to protect information stored in a database, it is known to store sensitive data encrypted in the database. To access such encrypted data you have to decrypt it, which could only be done by knowing the encryption algorithm and the specific decryption key being used. The access to the decryption keys could be limited to certain users of the database system, and further, different users could be given different access rights.

Specifically, it is preferred to use a so-called granular security solution for the encryption of databases, instead of building walls around servers or hard drives. In such a solution, which is described in the document WO 97/49211 by the same applicant, a protective layer of encryption is provided around specific sensitive data-items or objects. This prevents outside attacks as well as infiltration from within the server itself. This also allows the system administrator to define which data stored in databases are sensitive and thereby focusing the protection only on the sensitive data, which in turn minimizes the delays or burdens on the system that may occur from other bulk encryption methods.

Most preferably the encryption is made on such a basic level as in the column level of the databases. Encryption of whole files, tables or databases is not so granular, and does thus encrypt even non-sensitive data. It is further possible to assign different encryption keys of the same algorithm to different data columns. With multiple keys in place, intruders are prevented from gaining full access to any database since a different key could protect each column of encrypted data.

In the above mentioned solutions the system administrator is responsible for setting the user permissions. Thus, for a commercial database, the system administrator operates through a middle-ware, the access control system (ACS), which serve for authentication, encryption and decryption. The ACS is tightly coupled to the database management system (DBMS) of the database. The ACS controls access in real-time to the protected elements of the database.

Such a security solution provides separation of the duties of a security administrator from a database administrator (DBA). The DBA's role could for example be to perform usual DBA tasks, such as extending tablespaces etc, without being able to see (decrypt) sensitive data. The SA could then administer privileges and permissions, for instance add or delete users.

For most commercial databases, the database administrator has privileges to access the database and perform most functions, such as changing password of the database users, independent of the settings by the system administrator. An administrator with root privileges could also have full access to the database. This is an opening for an attack where the DBA can steal all the protected data without any knowledge of the protection system above. The attack is in this case based on that the DBA impersonates another user by manipulating that users password, even though the user's password is enciphered by a hash algorithm. An attack could proceed as follows. First the DBA logs in as himself, then the DBA reads the hash value of the users password and stores this separately. Preferably the DBA also copies all other relevant user data. By these actions the DBA has created a snapshot of the user before any altering. Then the DBA executes the command "ALTER USER username IDENTIFIED BY newpassword". The next step is to log in under the user name "username" with the password "newpassword" in a new session. The DBA then resets the user's password and other relevant user data with the previously stored hash value.

Thus, it is important to further separate the DBA's and the SA's privileges. For instance, if services are outsourced, the owner of the database contents may trust a vendor to administer the database. Then the role of the DBA belongs to an external person, while the important SA role is kept within the company, often at a high management level. Thus, there is a need for preventing a DBA to impersonate a user in a attempt to gain access to the contents of the database.

The document "Possible virus attacks against integrity programs and how to prevent them" by Bontchev V, Virus bulletin conference, Virus bulletin Ltd, Abington GB of 2 September 1992, p. 131-142, discloses various forms of anti-virus programs and in particular integrity checkers. However, this document is not concerned with the problem of protecting relational databases, or of preventing impersonation of administrators for such relational databases.

The document "A survey of password mechanisms: weaknesses and potential improvements. Part 1" by Jobusch D, Computers & Security, Elsevier Science Publishers, Amsterdam, NL, vol 8, nr. 7, of 1 November 1989, pages 587-603 discloses now the password is changed in a 4.3 BSD system. However, this document is not concerned with the problem of protecting relational databases, or of preventing impersonation of administrators for such relational databases.

The document "Database Security in Oracle 8i", by ORACLE, an Oracle Technical White Paper from November 1999, available from internet (http://technet.oracle.com/deploy/security/pdf/00W99/dbswp86.pdf) discloses that passwords can be stored in a database in encrypted form and that data in a database cannot normally be secured against the database administrator's access. However, this document is not concerned with the problem of preventing impersonation of administrators for relational databases.

### Object of the invention

It is therefore an object of the present invention to provide a method and a system for preventing an administrator impersonating a user of a relational database overcoming the above mentioned problems.

The object is achieved by a method and a system according to the appended claims.

### Summary of the invention

According to the invention a method for preventing an administrator impersonating a user of a relational database, which database at least comprises a table with at least a user password, wherein said password is stored as a hash value, said method comprises the steps of:
adding a trigger to said table, said trigger at least triggering an action when an administrator alters said table through the database management system (DBMS) of said database;
said triggered action involving:
calculating a new enciphered value of the same password but differing from said stored enciphered password value; and replacing said stored enciphered value said new enciphered value.

Hereby, a method is provided, which overcomes the above mentioned problems. With such a method the database administrator (DBA) can not impersonate a user. Impersonation means that the DBA steals the identity of an user, and is able to act in the name of the user, preferably while the user is unaware of the impersonation. Even though the DBA still can read the encrypted password and replace it, the attempt to impersonate a user will be detected and measures can be taken.

Preferably, the method comprises the further steps of:
calculating a control value of said trigger, such as a hash value; and
comparing the said trigger at the startup and at regular intervals with a recalculated control value. With these additional steps the DBA can not even try to modify the trigger and thereby manipulate the impersonation prevention method.

With the method above the intrusion is detected when a user tries to log in, since the hash value of the users password will not match. In order to detect intrusion earlier the method can preferably comprise the further step of comparing for each active user having access to sensitive data, the hash value of the current login password with the currently stored password hash value, whereby said step is performed after every change of the database content by said user.

In one embodiment, the trigger comprises means for reading a log of actions on said database, means for identifying commands for altering of user passwords in said log and means for identifying which user passwords that have been changed. Preferably the trigger is a daemon process.

Also according to the invention a impersonation prevention system for a relational database preventing an administrator impersonating another user, which database at least comprises a table with at least a user password, wherein said password is stored as an enciphered value, said system comprising:
calculation means for calculating an enciphered value of a user password, which calculation means is not accessible by said administrator;
replacing means for replacing said stored enciphered value; and
trigger means, which trigger at least said calculation means for calculation of a new enciphered value of the same password and said replacement means for replacing said stored enciphered value with said new enciphered value when a database administrator alters said table through a database management system (DBMS) of said database.

Such a system will overcome the risk for a DBA impersonating a user with all the advantages as the method previously described.

### Brief description of the drawing

For exemplifying purposes, the invention will be described to embodiments thereof illustrated in the attached drawing, wherein:
Fig. 1 is a schematic view of a system according to the invention; and
Fig. 2 is a flow-chart illustrating a method according to the invention.

### Description of preferred embodiments

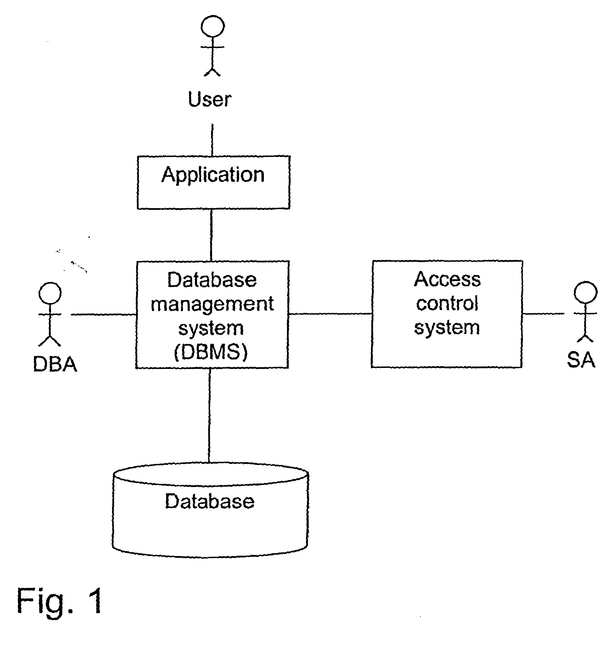

Referring to fig. 1, a schematic view of the components in a granular protection system of a database are shown. The central repository of the data is the database. In this case it is a relational database. An example of such a database is Oracle8^{®}, manufactured and sold by Oracle Corporation, USA. The data is stored in tables, which are interrelated with each other and the tables comprises columns and rows. The database can also hold other information such as information about the structure of the tables, data types of the data elements, constraints on contents in columns, user data such as password, etc. The database is operated through a database management system (DBMS). A DBMS is imposed upon the data to form a logical and structured organization of the data. A DBMS lies between the physical storage of data and the users and handles the interaction between the two.

An user normally does not operate the DBMS directly, the user uses an application which in turn operates with the DBMS. Maintenance work is performed by a database administrator (DBA), which connect direct to the DBMS. An administrator is a role with certain privileges given to a person, i.e. a special kind of user. For instance, the privileges can include allowance to add new users or read data, and normally the administrator is allowed to unrestricted use of the database. Thus, an administrator is allowed to manipulate data, manage users and other operating tasks of a database. A user, in contrast to an administrator, is normally only allowed to manipulate the actual data in the database, and often only some of the data. Which data an user can manipulate is regulated by the users permissions, which are set by the administrator.

In order to protect the data in the database an access control system (ACS) interacts with the DBMS in order to protect data from being exposed to users without the necessary rights. The access control system in the preferred embodiment could for instance be the commercially available system "Secure.Data", a system provided by the applicant. The ACS provide encryption and decryption of data, authentication of users and provides means for the security administrator (SA) to provide different users or user groups with different privileges to access data. The SA has the role of defining who gains access to which data.

Thus, an user accesses the database through an application, which in turn uses the DBMS to access the database. During the access, the ACS interacts in real time with the DBMS to permit or deny the access attempt. But, a DBA will always have access to the database. However, in order to protect the information for the DBA, sensitive data is encrypted by the ACS. But, there is risk that the DBA would impersonate an user in order to gain access to decrypted data. This is as described prevented by a system and a method according to the invention. Such a system according to a preferred embodiment will now be described.

The system provides calculation means for calculating a hash value of a user password. The first time a user is created by the SA, the SA gives the user a user name and a user password. The user name and password is stored in the database. In order to not reveal the password to for example a DBA, the password is stored as a hash value. The calculation means is preferably implemented in the ACS.

The system further comprises trigger means for triggering the calculation means for calculation of a new hash value. The trigger means survey the actions of a administrator and triggers an action when the administrator attempts to change the password of a user through the DBMS. Then the calculation means are triggered and a new hash value is calculated.

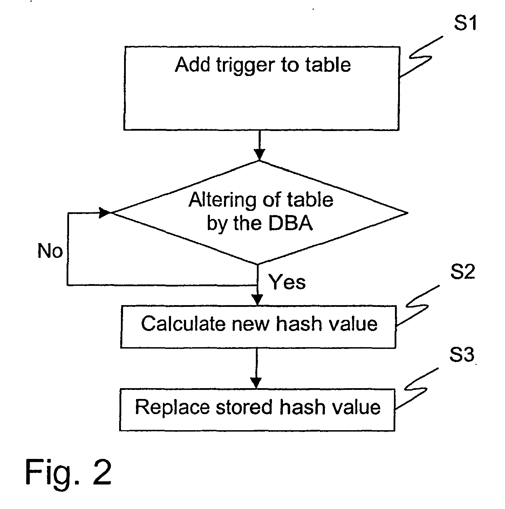

Referring to fig. 2, a preferred embodiment of a method according to the invention will now be described. Initially, when the SA creates a new user or changes the password of a user, the hash value of the password will be stored in a table. In a first step S1, a trigger is added to the table where user passwords are stored. The trigger triggers an action as soon as a database administrator alters the table. Preferably the trigger is implemented in the DBMS data language. The trigger could register each occasion an alter is made on the table, and preferably separate those alters that concern user passwords. Another possibility is to read the log or cache of the DBMS and search for altering statements. The trigger function could be implemented as a daemon process.

In another step, S2, depending on if a trigger has been fired, a new hash value of the same password is calculated. The new hash value differs from the previously stored hash value. This hash algorithm is not accessible by the DBA and is preferably executed within the ACS.

Then the new calculated hash value replaces the stored hash value in a step S3.

In another embodiment of the method according to the invention the integrity of the trigger is also checked at regular intervals. Otherwise, the DBA could deactivate the trigger temporarily in order to impersonate a user without being discovered. Therefore a snapshot is preferably created of the trigger. This could be done by creating a checksum or a hash value of the trigger which could be stored separately or in conjunction with the trigger.

The DBA attack will be discovered either when a user logs in or during the attempt. If the hash value of a user password is compared with the stored hash value and the comparison results in a mismatch, the user will not be able to log in. But, preferably after every action by a user, which has access to sensitive data, the hash value of the users login password should be compared with the stored password. In that way the DBA attack will be discovered sooner.

The invention has been described above in terms of a preferred embodiment. However, the scope of this invention should not be limited by this embodiment, and alternative embodiments of the invention are feasible, as should be appreciated by a person skilled in the art. For example, it is not necessary to use a hash algorithm for enciphering the password, instead a symmetrical or an asymmetrical encryption algorithm could be used.

Such embodiments should be considered to be within the scope of the invention, as it is defined by the appended claims.

## Claims

1. A method for preventing a database administrator from impersonating a user of a relational database, which database at least comprises one table with at least one user password, which password is used for logging on to said database, wherein said password is stored as an enciphered value, said method comprising the steps of:
adding a trigger to said table, said trigger at least triggering an action when a database administrator alters said table through a database management system (DBMS) for said database;
said triggered action involving:
calculating a new enciphered value of the same password but differing from said stored enciphered password value; and
replacing said stored enciphered password value with said new enciphered value.

2. The method of claim 1, wherein the enciphered password value and the new enciphered value are hash values.

3. A method according to claim 1 or 2, comprising the further steps of:
calculating a control value of said trigger, such as a hash value; and
comparing said trigger control value at the startup and at regular intervals with a recalculated check value.

4. A method according to claim 2 or 3, comprising the further step of comparing for each active user having access to sensitive data, the hash value of the current login password with the hash value of the currently stored password.

5. A method according to claim 4, wherein the further step of comparing is performed after every change of the database content by said user.

6. A method according to any of the preceding claims, wherein said trigger comprises means for reading a log of actions on said database, means for identifying commands for altering user passwords in said log and means for identifying which user passwords that have been changed.

7. A relational database system for preventing a database administrator impersonating another user, which database at least comprises one table with at least one user password, wherein said password is stored as an enciphered value, said system comprising:
calculation means for calculating an enciphered value of a user password, which calculation means is not accessible by said administrator;
replacing means for replacing said stored enciphered value; and
trigger means, which trigger at least said calculation means for calculation of a new enciphered value of the same password and said replacement means for replacing said stored enciphered value with said new enciphered value when a database administrator alters said table through a database management system (DBMS) of said database.

8. The database system of claim 7, wherein said calculation means is arranged to calculate hash values as the enciphered values.

## Patentansprüche

1. Verfahren zum Verhindern, dass sich ein Datenbank-Administrator als Nutzer einer relationalen Datenbank ausgibt, die mindestens eine Tabelle mit mindestens einem zum Einloggen in die Datenbank verwendeten Nutzer-Passwort aufweist, wobei das Nutzer-Passwort als verschlüsselter Wert gespeichert wird, mit dem Schritt:
Hinzufügen eines Triggers zu der Tabelle, wobei der Trigger zumindest eine Aktion triggert, wenn ein Datenbank-Administrator die Tabelle über ein Datenbank-Managementsystem (DBMS) für die Datenbank ändert, wobei die getriggerte Aktion Folgendes umfasst:
Berechnen eines neuen verschlüsselten Werts desselben Passworts, der jedoch von dem gespeicherten verschlüsselten Passwort-Wert abweicht; und
Ersetzen des gespeicherten verschlüsselten Passwort-Werts durch den neuen verschlüsselten Wert.

2. Verfahren nach Anspruch 1, **dadurch gekennzeichnet, dass** der verschlüsselte Passwort-Wert und der neue verschlüsselte Wert Hash-Werte sind.

3. Verfahren nach Anspruch 1 oder 2, das weiterhin folgende Schritte aufweist:
Berechnen eines Steuerwerts des Triggers, wie etwa eines Hash-Werts; und
Vergleichen des Trigger-Steuerwerts beim Starten und in regelmäßigen Abständen mit einem neu berechneten Kontrollwert.

4. Verfahren nach Anspruch 2 oder 3 mit dem weiteren Schritt des Vergleichens des Hash-Werts des aktuellen Einlogg-Passworts mit dem Hash-Wert des aktuell gespeicherten Passworts für jeden aktiven Nutzer, der Zugriff auf streng vertrauliche Daten hat.

5. Verfahren nach Anspruch 4, **dadurch gekennzeichnet, dass** der weitere Schritt des Vergleichens nach jeder Änderung des Datenbank-Inhalts durch den Nutzer ausgeführt wird.

6. Verfahren nach einem der vorhergehenden Ansprüche, **dadurch gekennzeichnet, dass** der Trigger Mittel zum Lesen eines Protokolls von Aktionen an der Datenbank, Mittel zum Identifizieren von Befehlen zum Ändern von Nutzer-Passwörtern in dem Protokoll und Mittel zum Identifizieren, welche Nutzer-Passwörter geändert worden sind, umfasst.

7. Relationales Datenbanksystem zum Verhindern, dass sich ein Datenbank-Administrator als ein anderer Nutzer ausgibt, wobei die Datenbank mindestens eine Tabelle mit mindestens einem Nutzer-Passwort aufweist, wobei das Passwort als verschlüsselter Wert gespeichert wird, mit:
Berechnungsmitteln zum Berechnen eines verschlüsselten Werts eines Nutzer-Passworts, auf die nicht von dem Administrator zugegriffen werden kann;
Ersetzungsmitteln zum Ersetzen des gespeicherten verschlüsselten Werts und
Triggermitteln, die zumindest die Berechnungsmittel zur Berechnung eines neuen verschlüsselten Werts desselben Passworts und die Ersetzungsmittel zum Ersetzen des gespeicherten verschlüsselten Werts durch den neuen verschlüsselten Wert triggern, wenn ein Datenbank-Administrator die Tabelle über ein Datenbank-Managementsystem (DBMS) der Datenbank ändert.

8. Datenbanksystem nach Anspruch 7, **dadurch gekennzeichnet, dass** die Berechnungsmittel so eingerichtet sind, dass sie Hash-Werte als verschlüsselte Werte berechnen.

## Revendications

1. Procédé destiné à empêcher qu'un administrateur de base de données ne se fasse passer pour un utilisateur d'une base de données relationnelle, laquelle base de données comprend au moins une table avec au moins un mot de passe utilisateur, lequel mot de passe est utilisé pour entrer dans ladite base de données, dans lequel ledit mot de passe est stocké en tant que valeur chiffrée, ledit procédé comprenant les étapes consistant à :
ajouter un déclencheur à ladite table, ledit déclencheur déclenchant au moins une action lorsqu'un administrateur de base de données modifie ladite table par l'intermédiaire d'un système de gestion de base de données (DBMS) pour ladite base de données ;
ladite action déclenchée consistant à :
calculer une nouvelle valeur chiffrée du même mot de passe mais qui diffère de ladite valeur chiffrée du mot de passe stockée ; et
remplacer ladite valeur chiffrée du mot de passe stockée par ladite nouvelle valeur chiffrée.

2. Procédé selon la revendication 1, dans lequel la valeur chiffrée du mot de passe et la nouvelle valeur chiffrée sont des valeurs de hachage.

3. Procédé selon la revendication 1 ou 2, comprenant les autres étapes consistant à :
calculer une valeur de commande dudit déclencheur, telle qu'une valeur de hachage ; et
comparer ladite valeur de commande du déclencheur, au lancement et à intervalles réguliers, à une valeur de vérification recalculée.

4. Procédé selon la revendication 2 ou 3, comprenant l'autre étape consistant à comparer pour chaque utilisateur actif ayant accès aux données sensibles, la valeur de hachage de l'actuel mot de passe de connexion à la valeur de hachage du mot de passe actuellement stocké.

5. Procédé selon la revendication 4, dans lequel l'autre étape consistant à comparer est effectuée par ledit utilisateur après que tous les changements du contenu de la base de données sont effectués.

6. Procédé selon l'une quelconque des revendications précédentes, dans lequel ledit déclencheur comprend un moyen destiné à lire un journal des actions sur ladite base de données, un moyen destiné à identifier des commandes modifiant les mots de passe utilisateurs dans ledit journal et un moyen destiné à identifier les mots de passe utilisateurs qui ont été changés.

7. Système de base de données relationnelle destiné à empêcher qu'un administrateur de base de données ne se fasse passer pour un autre utilisateur, laquelle base de données comprend au moins une table avec au moins un mot de passe utilisateur, dans lequel ledit mot de passe est stocké en tant que valeur chiffrée, ledit système comprenant:
un moyen de calcul destiné à calculer une valeur chiffrée d'un mot de passe utilisateur, lequel moyen de calcul n'est pas accessible audit administrateur;
un moyen de remplacement destiné à remplacer ladite valeur chiffrée stockée ; et
un moyen de déclenchement, qui déclenche au moins ledit moyen de calcul destiné à calculer une nouvelle valeur chiffrée du même mot de passe et ledit moyen de remplacement destiné à remplacer ladite valeur chiffrée stockée par ladite nouvelle valeur chiffrée lorsqu'un administrateur de base de données modifie ladite table par l'intermédiaire d'un système de gestion de base de données (DBMS) de ladite base de données.

8. Système de base de données selon la revendication 7, dans lequel ledit moyen de calcul est prévu pour calculer des valeurs de hachage en tant que valeurs chiffrées.
